# EUROPÄISCHE PATENTSCHRIFT

(11) **EP 0 352 216 B1**
(45) Veröffentlichungstag und Bekanntmachung des Hinweises auf die Patenterteilung: **12.01.1994**
(21) Anmeldenummer: 89710060.8
(22) Anmeldetag: 14.07.1989
(51) Int. Cl.: B60N 3/02

(54) **Anordnung zum Befestigen einer Haltestange**
Arrangement for fastening a retaining bar
Disposition de fixation d'une barre de retenue

(30) Priorität: 16.07.1988 DE 3824185
(43) Veröffentlichungstag der Anmeldung: 24.01.1990
(73) Patentinhaber: ABB HENSCHEL WAGGON UNION GmbH, D-13509 Berlin (DE)
(72) Erfinder: Kramer, Rolf, Dipl.-Ing., D-5900 Siegen 21 (DE); Kühnel, Arne, Dr.-Ing., D-1000 Berlin 45 (DE); Veit, Emil, Dipl-Ing., D-1000 Berlin 12 (DE)
(74) Vertreter: Rupprecht, Klaus, Dipl.-Ing.

(56) Entgegenhaltungen:
- DE-A- 1 400 855
- DE-A- 2 900 056
- GB-A- 727 908
- US-A- 4 675 937

## Beschreibung

Die Erfindung betrifft eine Anordnung zum Befestigen einer Haltestange insbesondere bei Fahrzeugen zur Personenbeförderung, die an ihrem einen Ende mit einem ortsfesten Teil des Fahrzeugs, z. B. Fußboden oder Sitzrükkenlehnen, verdrehfest verbunden ist, wobei die Haltestange an ihrem anderen Ende unter Zwischensschaltung eines elastischen Ringes in einem Topf oder einer Bundbuchse gelagert ist und wobei die Bundbuchse über ihren Bund und der Topf über einen an seinem vorderen offenen Ende angeformten Bund an den ortsfesten Teil des Fahrzeugs, z. B. Innendecke , befestigt ist.

Anordnungen zum Befestigen von Haltestangen sind aus der Praxis bekannt. Hierbei ist es beispielsweise üblich, zum Befestigen von Haltestangen Beschläge vorwiegend aus Leichtmetall zu verwenden, wobei die Haltestangen in solchen Beschlägen beispielsweise mittels Paßstiften oder Schrauben gegen Verdrehen gesichert sind. Derartige Beschläge haben den Nachteil, daß zu ihrer Befestigung speziell an gewölbten Flächen entweder entsprechend geformte Anschlußflansche an den Beschlägen selbst oder diesen Wölbungen anzupassende Zwischenfutter aus Holz oder Kunststoff vorgesehen werden müssen. Weiterhin sind zum Befestigen dieser Beschläge hinter den Wölbungen entsprechende Halterungen und Verstärkungen anzuordnen, um die Befestigungsschrauben anbringen zu können. Außerdem sind diese Beschläge und die zum Befestigen notwendigen Bauteile bei der aus Sicherheitsgründen erforderlichen Vielzahl von Haltestangen unwirtschaftlich und lohnaufwendig anzubringen, sowie bei erforderlichen Arbeiten hinter ihrer Anschraubfläche und auch bei der Fahrzeugreinigung hinderlich. Schließlich kommt noch hinzu, daß oftmals wegen der im Querschnitt des Fahrgastraumes unterschiedlichen Anordnung der Haltestangen mit den an sich kompakten Beschlägen der Gesamteindruck in diesem Raum gestört wird.

Durch die DE-PS 29 00 056 ist weiter eine Anordnung zum Befestigen einer Haltestange in Fahrzeugen zur Personenbeförderung bekannt, bei der die Haltestange an ihrem in die Innendecke des Fahrzeugs eingesetzten Ende über eine in die Innendecke formschlüssig eingesetzte, aus einem elastischen Werkstoff gebildete Lagerung gahaltert ist. Durch diese Ausführung können die eingangs genannten, aus der Praxis bekannten üblichen Beschläge entfallen. Ein einfacherer An- und Abbau der Haltestange und deren Halterung ist auch gewährleistet.

Nachteilig bei dieser Ausführung ist jedoch die Anordnung von passgenauen Bohrungen zur Aufnahme der Lagerung für die Haltestange. Ein weiterer Nachteil dieser Anordnung besteht darin, daß für unterschiedliche Wand- und Deckenstärken unterschiedlich dicke Lagerungen zur Aufnahme der Haltestangen vorgehalten werden müssen. Ein weiterer Nachteil dieser vorbekannten Ausführung besteht darin, daß der ortsfeste Teil des Fahrzeugs (zum Beispiel Innendecke), der die Haltestange und deren Lagerung aufnimmt, durch die relativ große Bohrung zur Aufnahme der Lagerung unzulässig geschwächt wird.

Aus der GB-A-727 908 ist eine gattungsgemäße Anordnung zum Befestigen einer Haltestange.

Die Aufgabe vorliegender Erfindung bestand darin, eine Anordnung zum Befestigen einer Haltestange der eingangs genannten Art unter Beseitigung der vorstehend aufgezeigten Mängel insoweit zu verbessern, daß für alle Wandstärken einheitliche Befestigungsmittel verwendet werden können, daß der Teil des Fahrzeugs, an dem die Haltestangen befestigt werden, durch die Anordnung der Aufnahmebohrungen nicht geschwächt werden und daß die Anordnung im Design dem Innenraum des Fahrzeugs anpaßbar ist.

Diese Aufgabe wird gemäß der Erfindung dadurch gelöst, daß der Topf oder die Bundbuchse in einem anderen ortsfesten Teil des Fahrzeugs formschlüssig oder mit Spiel eingesetzt ist, und daß der an der Außenfläche dieses ortsfesten Teiles anliegende Bund der Bundbuchse oder des Topfes an dem ortsfesten Teil befestigt ist.

Durch die Anordnung eines Topfes oder einer Bundbuchse zum Beispiel in der Innendecke des Fahrzeugs und die feste Verbindung dieser Teile miteinander, können hier Schubkräfte ohne Spannungsspitzen, die eine Beschädigung zum Beispiel der Innendecke nach sich ziehen würden, übergeleitet werden. Die Anordnung von paßgenauen Bohrungen zum Einsetzen der Bundbuchse oder des Topfes sind vorteilhafterweise nicht erforderlich, da die Bunde der Bundbuchse oder des Topfes auch größere Toleranzen überdecken. Bundbuchse und Topf können, da sie aus beliebigem festem Werkstoff hergestellt sein können, farblich und im Design dem Innenraum des Fahrzeugs angepaßt werden.

Der Topf weist zentrisch einen Zapfen mit einer axialen Bohrung auf. Durch die Bohrung dieses Zapfens können vorteilhaft Kabel verlegt werden.

Der elastische Ring ist zwischen Zapfen und Haltestange oder zwischen Haltestange und Buchse angeordnet. Über den elastischen Ring wird einerseits die Haltestange horizontal sicher gehalten und zum anderen können vertikal auftretende Höhenveränderungen spannungsfrei ausgeglichen werden.

Zwei Ausführungsbeispiele der Erfindung sind anhand der Zeichnung erläutert.

Es zeigen
- Fig. 1: ein erstes Ausführungsbeispiel der Erfindung im vertikalen Schnitt,
- Fig. 2: ein zweites Ausführungsbeispiel der Erfindung im vertikalen Schnitt.

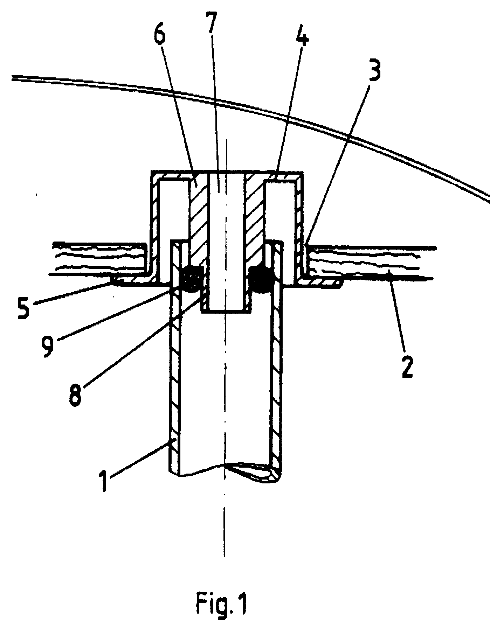

Bei beiden Ausführungsbeispielen der Erfindung werden die Haltestangen 1 einerseits verdrehfest an einem ortsfesten, in der Zeichnung nicht dargestellten Teil des Fahrzeugs, zum Beispiel dem Fahrzeugboden befestigt. Diese Befestigung geschieht auf übliche, für vorstehende Erfindung nicht wesentliche Weise. Das andere Ende der Haltestange 1 ragt in eine Bohrung oder Ausschnitt 3 eines anderen ortsfesten Teils des Fahrzeugs, zum Beispiel die Innendecke 2. Zur Aufnahme und Befestigung der Haltestange 1 in der Innendecke 2 ist in dem Ausführungsbeispiel nach Fig. 1 in den Ausschnitt 3 ein Topf 4 eingesetzt, der mit einem angeformten Bund 5 im Innenraum des Fahrzeugs gegen die Innendecke 2 anliegt. Der Topf 4 ist dabei über seinen Bund 5 an der Decke 2 angeschraubt, angenietet oder vorzugsweise angeklebt. Zentrisch weist der Topf 4 einen Zapfen 6 mit einer axialen Bohrung 7 auf. Diese Bohrung 7 dient zur Durchführung von Kabelsträngen. Die Haltestange 1 ist in dem Ausführungsbeispiel über den Zapfen 6 geführt, wobei eine Verjüngung 8 des Zapfens 6 einen elastischen Ring 9 trägt, der die Haltestange 1 horizontal spielfrei und elastisch über den Zapfen 6 mit dem Topf 4 verbindet. Der Topf 4 kann aus beliebigem, festem Material hergestellt sein und in seiner Farbgebung der dem Fahrgastraum zugewandten Seite der Innendecke angepaßt sein.

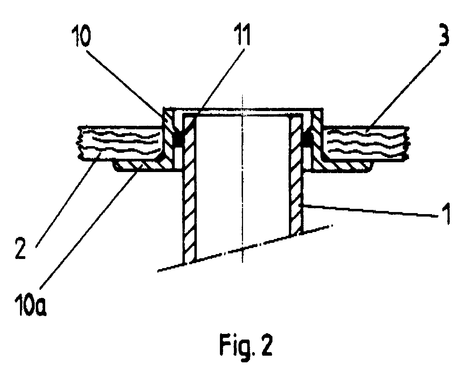

Bei dem zweiten, in der Fig. 2 dargestellten Ausführungsbeispiel der Erfindung, ragt die Haltestange 1 mit ihrem anderen Ende ebenfalls in eine Bohrung oder Ausschnitt 3 der Innendecke 2 des Fahrzeugs. In den Ausschnitt 3 ist eine Bundbuchse 10 eingesetzt, die mit ihrem Bund 10a fahrgastraumseitig gegen die Innendecke 2 anliegt. Die Bundbuchse 10 ist dabei über ihren Bund 10a durch Schrauben, Nieten oder vorzugsweise Kleben mit der Innendecke 2 verbunden. Zwischen Bundbuchse 10 und Haltestange 1 ist ein elastischer Ring 11 angeordnet, der die Haltestange 1 horizontal elastisch in der Bundbuchse 10 hält und über den vertikale Höhenveränderungen zwischen Haltestange und Innendecke 2 spannungsfrei ausgeglichen werden können. Die Befestigung der Bundbuchse 10 über ihren Bund 10a an der Innendecke 2 ermöglicht große Toleranzen des Ausschnittes 3 und gewährleistet eine spannungsspitzenfreie Befestigung der Haltestange 1 in der Innendecke 2.

## Patentansprüche

1. Anordnung zum Befestigen einer Haltestange (1), insbesondere bei Fahrzeugen zur Personenbeförderung, die an ihrem einen Ende mit einem ortsfesten Teil des Fahrzeugs, z.B. Fußboden oder Sitzrücklehnen, verdrehfest verbunden ist, wobei die Haltestange (1) an ihrem anderen Ende unter Zwischenschaltung eines elastischen Ringes (9 bzw. 10) in einem Topf (4) oder einer Buchbuchse (10) gelagert ist und wobei die Bundbuchse (10) über ihren Bund (10a) und der Topf (4) über einen an seinem vorderen offenen Ende angeformten Bund (5) an den ortsfesten Teil des Fahrzeugs, z. B. Innendecke (2), befestigt ist, dadurch gekennzeichnet, daß der Topf (4) oder die Bundbuchse (10) in einer Bohrung des ortsfesten Teiles des Fahrzeuges formschlüssig oder mit Spiel eingesetzt ist und daß der an der Außenfläche dieses ortsfesten Teiles anliegende Bund (10a bzw. 5) der Bundbuchse (10) oder des Topfes (4) an dem ortsfesten Teil befestigt ist.

2. Anordnung zum Befestigen einer Haltestange nach Anspruch 1, dadurch gekennzeichnet, daß der Topf (4) zentrisch einen Zapfen (6) mit einer axialer Bohrung (7) aufweist.

3. Anordnung zum Befestigen einer Haltestange nach den Ansprüchen 1 oder 2, dadurch gekennzeichnet, daß der elastische Ring (9 bzw. 10) zwischen Zapfen (6) und Haltestange (1) oder zwischen Haltestange (1) und Buchse (10) angeordnet ist.

## Claims

1. Arrangement for fastening a stay bar (1), especially in vehicles for the transportation of passengers, which stay bar is connected at its one end, in a twist-proof manner, to a fixed part of the vehicle, e.g. floor or seat backrests, the stay bar (1) being mounted at its other end, an elastic ring (9 or 11) being interposed, in a pot (4) or a flange bushing (10) and the flange bushing (10) being fastened to the fixed part of the vehicle, e.g. interior roof (2), by means of its flange (10a) and the pot (4) by means of a flange (5) formed onto its front, open end, characterized in that the pot (4) or the flange bushing (10) is inserted, in a positive-locking manner or with play, in a bore in the fixed part of the vehicle and in that the flange (10a or 5) of the flange bushing (10) or pot (4), which flange bears against the outer surface of this fixed part, is fastened to the fixed part.

2. Arrangement for fastening a stay bar according to Claim 1, characterized in that the pot (4) centrically exhibits a spigot (6) having an axial bore (7).

3. Arrangement for fastening a stay bar according to Claims 1 or 2, characterized in that the elastic ring (9 or 11) is disposed between the spigot (6) and the stay bar (1) or between the stay bar (1) and the bushing (10).

## Revendications

1. Dispositif de fixation d'une barre pour se tenir (1), notamment dans des véhicules destinés au transport de personnes, laquelle barre, à l'une de ses extrémités, est liée de manière fixe en rotation à un élément fixe du véhicule, par exemple au plancher ou au dossier de sièges, la barre étant montée à son autre extrémité dans une cuvette (4) ou dans une douille à collerette (10) avec interposition d'une bague élastique (9 ou 10), la douille (10) étant fixée par l'intermédiaire de sa collerette (10a) et la cuvette (4) étant fixée par l'intermédiaire d'une collerette (5) formée à son extrémité antérieure ouverte sur une partie fixe du véhicule, par exemple sur le plafond (2), dispositif caractérisé par le fait que la cuvette (4) ou la douille à collerette (10) est montée par complémentarité de forme ou avec jeu dans un alésage de la partie fixe du véhicule et par le fait que la collerette (10a ou 5) de la douille (10) ou de la cuvette (4) qui est en contact avec la partie fixe est fixée sur ladite partie fixe.

2. Dispositif de fixation d'une barre pour se tenir selon la revendication 1, caractérisé par le fait que la cuvette (4) comporte en son centre un axe (6) percé d'un trou (7) axial.

3. Dispositif de fixation d'une barre pour se tenir selon la revendication 1 ou 2, caractérisé par le fait que la bague élastique (9 ou 10) est disposée entre l'axe (6) et la barre (1) ou entre la barre (1) et la douille (10).
